(19) **Europäisches Patentamt European Patent Office Office européen des brevets**

(11) **EP 4 438 965 B1**

(12) **EUROPEAN PATENT SPECIFICATION**

(45) Date of publication and mention of the grant of the patent:
**24.12.2025 Bulletin 2025/52**

(21) Application number: **24167442.3**

(22) Date of filing: **28.03.2024**

(51) International Patent Classification (IPC):
*F24F 11/30* (2018.01)     *F24F 11/46* (2018.01)
*F24F 11/61* (2018.01)     *F24F 11/64* (2018.01)
*F24F 11/65* (2018.01)     *F24F 11/873* (2018.01)

(52) Cooperative Patent Classification (CPC):
**F24F 11/64; F24F 11/30; F24F 11/46; F24F 11/61; F24F 11/65; F24F 11/873;** F24F 11/86;
F24F 2110/10; F24F 2120/20; F24F 2140/60;
Y02B 30/70

(54) **CONTROL METHOD, APPARATUS, COMPUTER DEVICE AND STORAGE MEDIUM FOR PREHEATING FUNCTION OF AIR CONDITIONER**

STEUERUNGSVERFAHREN, VORRICHTUNG, COMPUTERVORRICHTUNG UND SPEICHERMEDIUM ZUR VORWÄRMUNG EINER KLIMAANLAGE

PROCÉDÉ DE COMMANDE, APPAREIL, DISPOSITIF INFORMATIQUE ET SUPPORT D'INFORMATIONS POUR FONCTION DE PRÉCHAUFFAGE DE CLIMATISEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.03.2023 CN 202310332248**

(43) Date of publication of application:
**02.10.2024 Bulletin 2024/40**

(73) Proprietor: **Guangdong Carrier Heating, Ventilation And Air Conditioning Co., Ltd.**
**Foshan Guangdong 528244 (CN)**

(72) Inventors:
• **LI, Yunlin**
  **Guangdong, 528244 (CN)**
• **ZHANG, Qian**
  **Guangdong, 528244 (CN)**

(74) Representative: **Dehns**
  **10 Old Bailey**
  **London EC4M 7NG (GB)**

(56) References cited:
WO-A1-2022/068471     WO-A1-2022/068472
CN-A- 113 531 802     CN-B- 109 579 229
US-B2- 11 525 595

## Description

### Technical field

The present invention relates to the technical field of air conditioner electronic control, and in particular to a control method, apparatus, computer device and storage medium for a preheating function of an air conditioner.

### Background

When an air conditioner is in severe cold conditions, the transmission oil in the machine body congeals. The viscosity of the oil and refrigerant mixture is too high, which causes high start-up resistance of the compressor. At this time, the normal start-up of the unit will be affected. In worse cases, if the oil congeals and agglomerates, it may cause hard friction and consequent damage to the compressor. In order to deal with this situation, the preheating function for the compressor is generally used to heat the engine oil to help the unit start normally, thus protecting the compressor from damage at start-up during cold winter and extending the service life.

The logic of the preheating function of existing air conditioners is relatively simple. Generally, it is determined whether to enable the preheating function for the compressor based on three conditions: ambient temperature, exhaust temperature and compressor shutdown time. With this determination approach, the preheating function for the compressor is enabled every day. For a house that is uninhabited for a long time or is only inhabited for a fixed short time period every week, the preheating function for the compressor will also be enabled during long time periods when the house is uninhabited, causing unnecessary waste of electric energy, which is adverse to energy conservation.

Since different users have different habits of using air conditioners, and enabling the preheating function is a prerequisite for rapid heating of an air conditioner, there is a need for a control method capable of not only enabling the preheating function in advance to ensure that the air conditioner can heat quickly when in use, but also disabling the preheating function when the user does not need to use the air conditioner, thereby saving electric energy.

WO2022/068472 discloses a control method and a control apparatus for a preheating function of an air conditioner.

### Summary of the Invention

Embodiments of the present invention provide a control method, apparatus, computer device and storage medium for a preheating function of an air conditioner to solve the technical problem of the waste of electric energy caused by enabling the preheating function when the air conditioner is idle.

According to a first aspect of the invention there is provided a control method for a preheating function of an air conditioner comprising the following steps:

   acquiring air conditioner usage data of a user within a predetermined period, and dividing the air conditioner usage data into different data groups on a weekly basis;
   acquiring a preset randomness index, regularity index and data proportion value representing a usage pattern of the user;
   calculating a user habit output value representing a usage habit of the user based on the data groups and the data proportion value;
   determining an attribute day to which the current day belongs based on the user habit output value and a preset calendar system, and outputting a corresponding control instruction based on the randomness index, the regularity index and the attribute day determination result;
   detecting a current temperature of the air conditioner in real time, calculating a preheating score of the air conditioner based on the current temperature, and acquiring a minimum preheating time of the air conditioner based on the preheating score; and
   determining and executing enabling and disabling of the preheating function of the air conditioner based on the control instruction, the minimum preheating time and a current operating status of the air conditioner.

Optionally, the step of acquiring air conditioner usage data of a user within a predetermined period, and dividing the air conditioner usage data into different data groups on a weekly basis specifically includes:

   defining a determination time zone, the determination time zone being every time period of an hour every day within a week;
   recording and saving the air conditioner usage data within the predetermined period, the air conditioner usage data including the enabling and disabling of the air conditioner in the determination time zone; and

dividing the saved air conditioner usage data within the predetermined period into different data groups on a weekly basis.

Optionally, the attribute day includes an idle day, a usage day and a holiday; and the step of determining an attribute day to which the current day belongs based on the user habit output value and a preset calendar system and outputting a corresponding control instruction based on the attribute day determination result specifically includes:

acquiring a user habit output value, and determining the attribute day to which the current day belongs based on the user habit output value and the preset calendar system;

if the attribute day is a usage day, calculating the air conditioner usage data on that day based on the data groups and the data proportion value while pre-determining whether to enable the preheating function of the air conditioner in advance based on the randomness index, the regularity index and the air conditioner usage data calculation result, and outputting the pre-determination result as a control instruction;

if the attribute day is an idle day and not a holiday, outputting a disabling control instruction; and

if the attribute day is an idle day and a holiday, acquiring the pre-determination result of the last usage day closest to the current day and outputting it as a control instruction.

Optionally, the step of determining and executing enabling and disabling of the preheating function of the air conditioner based on the control instruction, the minimum preheating time and a current operating status of the air conditioner specifically includes and the minimum preheating time:

acquiring a time period during which it is necessary to enable the preheating function of the air conditioner in advance in the control instruction;

in the time period during which it is necessary to enable the preheating function in advance, acquiring the current operating status of the air conditioner;

if the air conditioner has been turned on, disabling the preheating function; and

if the air conditioner is in standby status, enabling the preheating function based on the minimum preheating time.

Optionally, after the step of determining and executing enabling and disabling of the preheating function of the air conditioner based on the control instruction, the minimum preheating time and a current operating status of the air conditioner, the method includes:

recording actual usage data of the user and updating the air conditioner usage data within the predetermined period with the actual usage data; and

updating the randomness index, the regularity index and the data proportion value using the updated air conditioner usage data.

Optionally, the step of updating the air conditioner usage data within the predetermined period with the actual usage data specifically includes:

saving the actual usage data as the air conditioner usage data of the current day and deleting the air conditioner usage data farthest from the current day.

Optionally, the step of updating the randomness index, the regularity index and the data proportion value using the updated air conditioner usage data specifically includes:

acquiring the proportion of invalid determinations in total determinations in the updated air conditioner usage data and increasing or decreasing the randomness index accordingly based on whether the proportion meets a preset threshold to update the randomness index, where the total determinations are cases where it is determined based on the control instruction that the preheating function of the air conditioner needs to be enabled, and the invalid determinations are the cases where it is determined based on the control instruction that the preheating function of the air conditioner needs to be enabled but the user does not turn on the air conditioner;

acquiring the updated air conditioner usage data and performing conditional determination on the usage data of all data groups corresponding to the current day, and increasing or decreasing the regularity index accordingly based on the result of the conditional determination to update the regularity index; and

acquiring the updated randomness index and regularity index and comparing them, if the randomness index is greater, calculating and updating the data proportion value based on a preset formula, and if the regularity index is greater, updating the data proportion value to a preset value.

According to a second aspect of the invention there is provided a control apparatus for a preheating function of an air conditioner, comprising:

a data grouping module configured to acquire air conditioner usage data of a user within a predetermined period, and divide the air conditioner usage data into different data groups on a weekly basis;

a data acquisition module configured to acquire a preset randomness index, regularity index and data proportion value representing a usage pattern of the user;

a data calculation module configured to calculate a user habit output value representing a usage habit of the user based on the data groups and the data proportion value;

an instruction output module configured to determine an attribute day to which the current day belongs based on the user habit output value and a preset calendar system, and output a corresponding control instruction based on the randomness index, the regularity index and the attribute day determination result;

a preheating calculation module configured to detect a current temperature of the air conditioner in real time, calculate a preheating score of the air conditioner based on the current temperature, and acquire a minimum preheating time of the air conditioner based on the preheating score; and

an execution module configured to determine and execute enabling and disabling of the preheating function of the air conditioner based on the control instruction, the minimum preheating time and a current operating status of the air conditioner.

According to a third aspect of the invention there is provided a computer device comprising a memory and a processor, the memory having a computer program stored therein, the processor, when executing the computer program, implementing the steps of the control method for a preheating function of an air conditioner described above.

According to a fourth aspect of the invention there is provided a computer-readable storage medium having a computer program stored therein that, when executed by a processor, implements the steps of the control method for a preheating function of an air conditioner described above.

Compared with the related art, the embodiments of the present invention mainly have the following beneficial effects:

with the control method for a preheating function of an air conditioner described in the embodiments of the present invention, air conditioner usage data of a user within a predetermined period is acquired, and the air conditioner usage data is divided into different data groups on a weekly basis; a preset randomness index, regularity index and data proportion value representing a usage pattern of the user are acquired; a user habit output value representing a usage habit of the user is calculated based on the usage data and the data proportion value; an attribute day to which the current day belongs is determined based on the user habit output value and a preset calendar system, and a corresponding control instruction is output based on the randomness index, the regularity index and the attribute day determination result; and enabling and disabling of the preheating function of the air conditioner are determined and executed based on the control instruction and a current operating status of the air conditioner. In this way, the air conditioner usage habit of the user can be effectively determined based on different attribute days and user habit output values, and the enabling and disabling of the preheating function of the air conditioner on different attribute days can be adjusted accordingly. This method can continuously learn the air conditioner usage habit of the user and make modifications in time, so that the preheating function can be disabled when the air conditioner is idle, and the preheating function can be enabled in advance when it needs to be used in order to ensure that the user can use the air conditioner immediately, thereby effectively improving the use experience of the air conditioner for the user. Also, it can pre-estimate the time period during which the user does not need to use the air conditioner so as to automatically disable the preheating function, thereby effectively saving electricity when the air conditioner is idle in winter.

**Description of the drawings**

Certain exemplary embodiments will now be described in greater detail by way of example only and with reference to the accompanying drawings in which:

Fig. 1 is a flowchart of a control method for a preheating function of an air conditioner;
Fig. 2 is a flowchart of a specific implementation before the step S10 in Fig. 1;
Fig. 3 is a flowchart of a specific implementation of the step S10 in Fig. 1;
Fig. 4 is a flowchart of a specific implementation of the step S40 in Fig. 1;
Fig. 5 is a schematic table of exemplary user air conditioner usage data;
Fig. 6 is a flowchart of a specific implementation of the step S60 in Fig. 1;
Fig. 7 is a flowchart of a specific implementation after the step S60 in Fig. 1;
Fig. 8 is a schematic structural diagram of a control apparatus for a preheating function of an air conditioner; and
Fig. 9 is a schematic structural diagram of a computer device.

**Detailed Description**

Unless otherwise defined, all technical and scientific terms used herein shall have the same meanings as those generally understood by those skilled in the art of the present invention. The terms used herein are intended merely for the purpose of describing specific embodiments and are not intended to limit the present invention, the scope of the invention being set out in the claims.

The terms "include" and "have" and any variations thereof in the specification and claims and the above brief description of the drawings of the present invention are intended to cover non-exclusive inclusion. The terms "first" and "second" in the specification and claims and the above brief description of the drawings of the present invention are used to distinguish between different objects, not to describe a particular sequence.

The reference to an "embodiment" herein means that the particular feature, structure, or characteristic described in conjunction with the embodiment may be included in at least one embodiment of the present invention. The appearances of this phrase in various places in the specification are not necessarily all referring to the same embodiment, nor are separate or alternative embodiments mutually exclusive of other embodiments. Those skilled in the art understand, both explicitly and implicitly, that the embodiments described herein may be combined with other embodiments.

In order to enable those skilled in the art to better understand the solutions of the present invention, the technical solutions in the embodiments of the present invention will be clearly and completely described below in conjunction with the accompanying drawings.

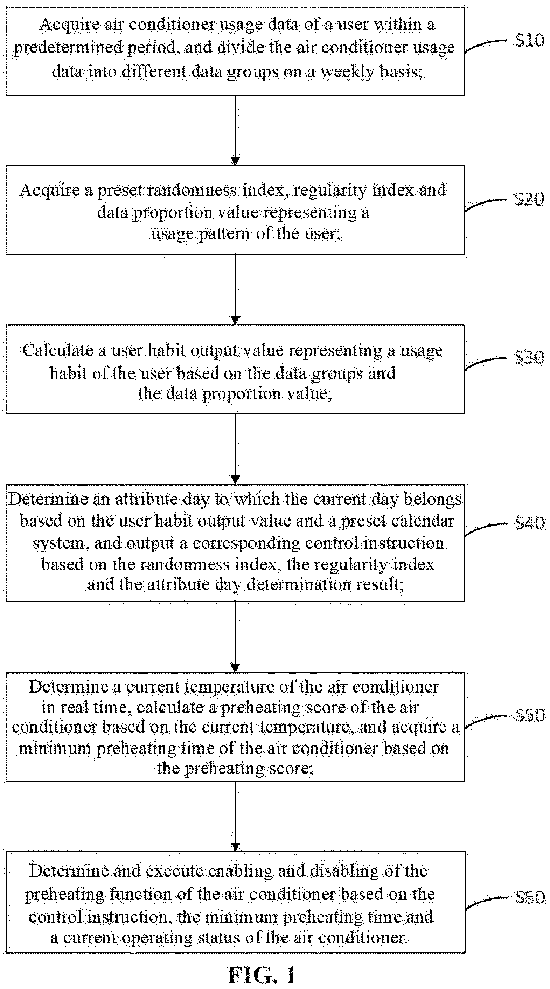

Refer to Fig. 1, which shows a flowchart of an embodiment of a control method for a preheating function of an air conditioner according to the present invention. The control method for a preheating function of an air conditioner includes the following steps.

In S10, air conditioner usage data of a user within a predetermined period is acquired, and the air conditioner usage data is divided into different data groups on a weekly basis.

In this embodiment, the air conditioner usage data is acquired by recording whether the user has turned on the air conditioner within the time period of an hour within a week. Specifically, each of the twenty-four hours in each of the seven days in a week is defined as a determination time zone. x and y are used to represent the hour ordinal and day ordinal correspondingly. For example, the hour from 0:00 to 1:00 on Monday is represented by $x_1y_1$, and the hour from 1:00 to 2:00 on Monday is represented by $x_2y_1$, and so on. Then, the hour from 12:00 to 13:00 on Sunday is represented by $x_{13}y_7$. As long as the air conditioner has ever been turned on (in whichever mode that requires the compressor to be turned on, such as cooling, heating, and dehumidification, even if only for one second, the air conditioner is considered to be ever turned on) within the time range represented by this variable, the variable is assigned a value of 1. For example, if the air conditioner is turned on for 5 minutes between 12:00 and 13:00 on Sunday, $x_{13}y_7=1$ is recorded; and if the air conditioner has not been turned on, $x_{13}y_7=0$ is recorded.

In specific implementation, the predetermined period is generally an integer multiple of a week. In order to facilitate calculation and ensure the accuracy of the data, in this embodiment, three weeks are defined as a period, and the data is divided into three groups: A, B, and C. A represents the data of the last week, B represents the data of the week before the last week, and C represents the data of the week before the last two weeks. In calculation, A, B, and C take the data of the same day every week. For example, group A takes the data of Monday, then group B also takes the data of Monday, and similarly, group C also takes the data of Monday. When the data of the whole predetermined period has been saved, new data overwrites the old data to realize data update. However, after the data of the whole predetermined period is saved for the first time, the usage data being updated always meets the duration of a predetermined period.

This embodiment can effectively record air conditioner usage by the user by recording and saving the air conditioner usage data, so as to facilitate subsequent determination and learning of the air conditioner usage habit of the user.

In S20, a preset randomness index, regularity index and data proportion value representing a usage pattern of the user are acquired.

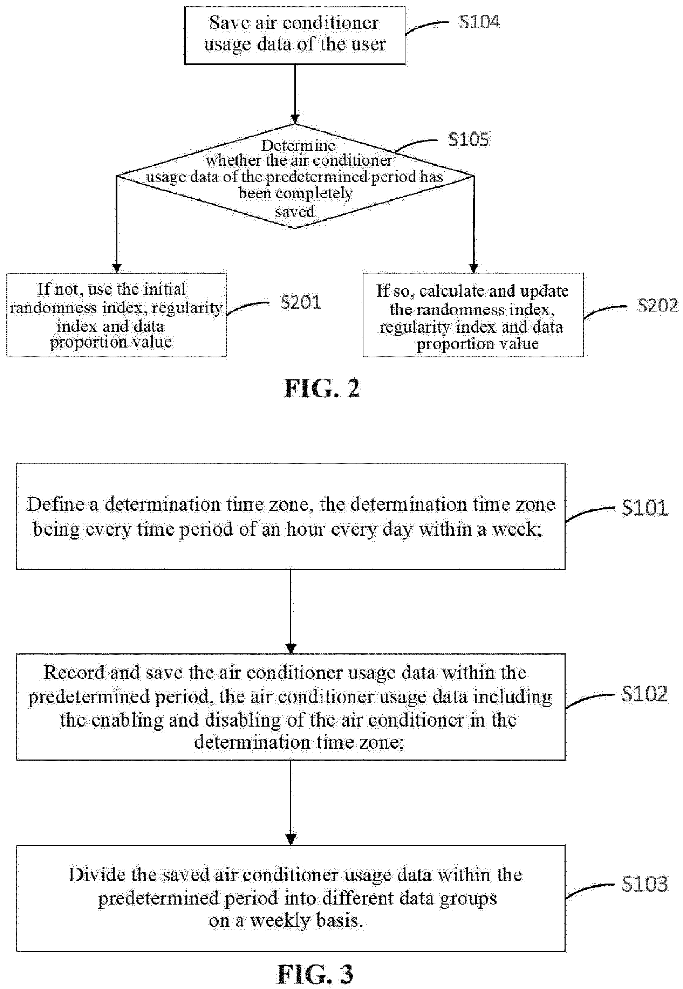

In this embodiment, the preset randomness index, regularity index and proportion value are relative to the case where the usage data of the user of the predetermined period has not been completely saved. In specific implementation, as shown in Fig. 2, before the step S10, there are the following steps: S104, saving air conditioner usage data of the user; S105, determining whether the air conditioner usage data of the predetermined period has been completely saved; S201, if not, using the initial randomness index, regularity index and data proportion value; and S202, if so, calculating and updating the randomness index, regularity index and data proportion value. In this embodiment, it is necessary to first determine whether the air conditioner usage data of the user of the predetermined period has been completely saved before starting to acquire the randomness index, regularity index and data proportion value. This method starts collecting air conditioner usage data of the user when the air conditioner is powered on. Since the recording and saving of the air conditioner usage data of the user has just started at this time, data of the predetermined period cannot be completely saved immediately, so the initial randomness index, regularity index and data proportion value need to be used. To facilitate description of the formula, the randomness index and the regularity index are represented by P and Q respectively in this embodiment. When the total amount of data collected is less than that corresponding to three weeks, the initial value is defined as P=Q=0. The data proportion value represents the proportion of each data group in the calculation, represented by n1, n2 and n3 in this embodiment. n1, n2, and n3 correspond to the three data groups A, B, and C respectively. The relationship between the three values is n1+n2+n3= 1. Also, the values of P and Q will also affect the values of n1, n2 and n3. However, when the total amount of data collected is less than that corresponding to three weeks, the values of n1, n2 and n3 are not affected by the values of P and Q. The preset values of n1, n2 and n3 are n1=0.34, n1=0.33 and n1=0.33 respectively.

This embodiment can facilitate subsequent calculations by presetting the randomness index, the regularity index and the data proportion value.

In S30, a user habit output value representing a usage habit of the user is calculated based on the data groups and the data proportion value.

In this embodiment, the user habit output value is represented by X, which is obtained through the calculation formula $X = n1*A + n2*B + n3*C$. In this formula, X represents a day in the current week, and A, B, and C represent a day in the last week, a day in the week before the last week, and a day in the week before the last two weeks, respectively. The data for the same day of a week is used in calculation for all of X, A, B, and C. Assume that the day for calculation is Monday, then the data for Monday of the A-th week is statistically collected. If $x1y1+Ax2y1+x3y1+..+x24y1 \geq 1$ (the data of x and y come from the data group A), it is determined that A = 1; otherwise, A =0. In the same way, the values of B and C can be obtained.

This embodiment can determine air conditioner usage habit of the user by calculating the user habit output value, thereby well understanding the air conditioner usage pattern of the user.

In S40, an attribute day to which the current day belongs is determined based on the user habit output value and a preset calendar system, and a corresponding control instruction is output based on the randomness index, the regularity index and the attribute day determination result.

In this embodiment, there are three types of attribute days: idle days, usage days and holidays, which correspond to respective variable values. The value of idle days is expressed as S=0, the value of usage days is expressed as S=1, and the value of holidays is expressed as H= {0, 1}. It is determined whether the current day is a holiday by reading the holiday information in the preset calendar system. The determination of idle days and usage days is based on whether the user habit output value meets a preset threshold. Specifically, it is determined based on the calendar system whether the day is a holiday, if so, H=1; otherwise, H=0. The attribute day is determined based on $X=n1*A+n2*B+n3*C$. If $X \geq 0.5$, it is determined that the current day is a usage day, and S=1. Otherwise, S=0.

In this embodiment, by determining the attribute day to which the current day when the user uses the air conditioner belongs, air conditioner usages by the user on different attribute days can be distinguished and determined to further improve the accuracy of the system.

In S50, a current temperature of the air conditioner is determined in real time, a preheating score of the air conditioner is calculated based on the current temperature, and the minimum preheating time of the air conditioner is acquired based on the preheating score; and

in this embodiment, the calculation of the preheating score requires acquiring the temperature coefficient of the air conditioner and the time when the air conditioner is OFF. The time when the air conditioner is OFF refers to the time from the last time when the compressor is turned on to the next time when it is determined to enable the preheating function in advance in unit of hours, which is assigned an integer value in calculation. The temperature coefficient of the air conditioner is determined as follows: if the current temperature is above 0°C, the value is 0; if the current temperature is below -30°C, the value is 30; and if the current temperature is between -30°C and 0°C, the value is the absolute value of the current temperature. The current temperature of the air conditioner mentioned above refers to the outdoor ambient temperature measured by the temperature sensing device on the air conditioner. The calculation formula of the preheating score is: preheating score F = temperature coefficient $\times$ air conditioner OFF time. For example, if the air conditioner is not turned on within 24 hours, and the measured outdoor ambient temperatures are -25°C for 8 hours and -20°C for 16 hours respectively, then the preheating score $F = 8 \times |-25| + 16 \times |-20| = 520$. The minimum preheating time is determined based on the correspondence between the preset preheating score and the minimum preheating time.

The method used in this embodiment to determine the minimum preheating time is a method of linear function model. Considering that the maximum preheating score should be the maximum preheating score x of 5040 when the air conditioner is continuously frozen at -30°C for 168 hours. It is assumed that the preheating time y needs to be at least 60 minutes when the preheating score x is 5040. There is no need for preheating when the preheating score x is 0. Based on this, it is confirmed that the two points (x, y) = (0, 0) and (5040, 60). Using these two points, it can be obtained that the preset correspondence is y = 0.0119x. For example, when the preheating score x is 520, the minimum preheating time y is 6.2 minutes.

It should be understood that the above-mentioned range of the preheating score x and range of the preheating time y, as well as the correspondence between the two, can be adjusted according to the actual situation.

In S60, enabling and disabling of the preheating function of the air conditioner are determined and executed based on the control instruction, the minimum preheating time and a current operating status of the air conditioner.

In this embodiment, in the case where the air conditioner is frozen at an extremely low temperature, it is necessary to protect the compressor and avoid forcible turn-on of the compressor when the preheating control instruction is inconsistent with the actual instruction from the user. Therefore, it is necessary to acquire the minimum preheating time and control the compressor to be preheated for a minimum preheating time between turn-ons to effectively protect the compressor.

In this embodiment, the enabling and disabling of the preheating function of the air conditioner is comprehensively determined based on the control instruction, the minimum preheating time and a current operating status of the air conditioner, which can effectively improve the control accuracy of the enabling and disabling of the preheating function of the air conditioner, thereby achieving electricity energy conservation while improving user experience of the air conditioner.

The calculations and algorithmic operations mentioned in this embodiment are all completed by learning algorithms. By using learning algorithms, air conditioner usage habit of the user can be effectively learned to improve the accuracy of method determination. Also, during specific implementation, in this embodiment, the acquired user randomness index value and regularity index value can be displayed to the user, and the air conditioner control solution corresponding to a high randomness index value or a high regularity index value is set for selection by the user. For example, when the randomness index value is too high, indicating that the usage habit of the user is relatively random, the same comfort solution as the original preheating start function of the air conditioner can be set to ensure that the user can obtain a comfortable air conditioner use experience; when the regularity index value is too high, indicating that usage habit of the user is relatively regular, an energy conservation solution can be set to use this control method to determine and control the preheating function of the air conditioner, so as to ensure that the enabling and disabling of the preheating function of the air conditioner can be automatically adjusted to effectively achieve energy conservation. In specific implementation, the above solution can be set so that a wifi terminal sends a corresponding function recommendation prompt to the customer after obtaining the P value and Q value, or the above solution can be set so that a corresponding function button and prompt is added to a control apparatus such as a wired controller for selection by the customer, so as to facilitate the customer's control by himself and effectively improve the use experience of the customer.

Continue to refer to Fig. 3, which shows a flowchart of the step S10 according to a specific embodiment, including the following steps.

In S101, a determination time zone is defined, the determination time zone being every time period of an hour every day within a week.

In this embodiment, the specific situation of definition of the determination time zone has been described above. By defining the determination time zone, the usage data of the air conditioner can be recorded conveniently.

In S102, the air conditioner usage data within the predetermined period is recorded and saved, the air conditioner usage data including the enabling and disabling of the air conditioner in the determination time zone; and

in this embodiment, the air conditioner usage data is recorded and saved as described above. By recording the enabling and disabling of the air conditioner, the situation and pattern of air conditioner usage by the user can be effectively known to facilitate subsequent algorithmic learning.

In S103, the saved air conditioner usage data within the predetermined period is divided into different data groups on a weekly basis.

In this embodiment, the data groups are divided as described above. By division of the data groups, the usage of the air conditioner by the user in every week can be effectively known, so as to determine whether the user uses the air conditioner with regularity.

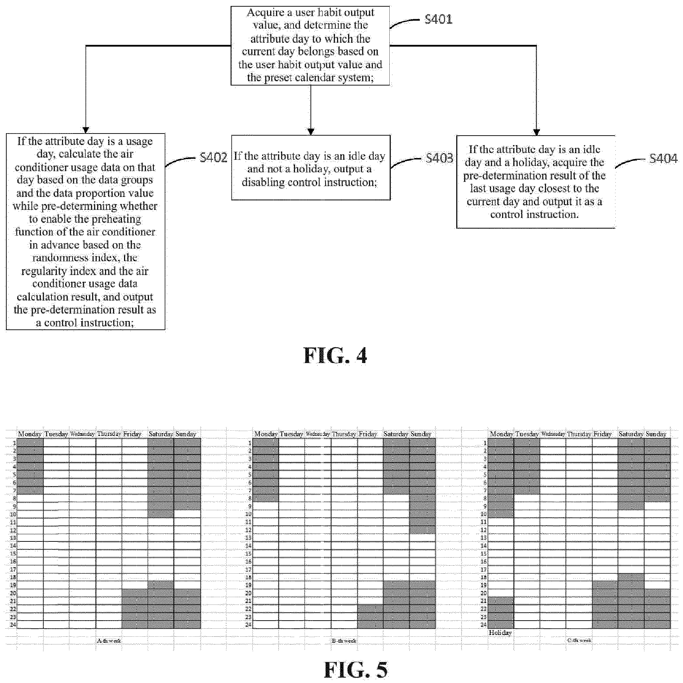

Continue to refer to Fig. 4, which shows a flowchart of the step S40 according to a specific embodiment, including the following steps.

In S401, a user habit output value is acquired, and the attribute day to which the current day belongs is determined based on the user habit output value and the preset calendar system.

In this embodiment, it is directly determined whether the current day is a holiday through the preset calendar system, specifically, through the date with "holiday" on the calendar system. Then, it is determined whether the current day is an idle day or a usage day based on the user habit output value. The idle day and usage day are mutually exclusive, and the holiday is independent of the idle day and usage day.

In S402, if the attribute day is a usage day, the air conditioner usage data on that day is calculated based on the data groups and the data proportion value while it is pre-determined whether to enable the preheating function of the air conditioner in advance based on the randomness index, the regularity index and the air conditioner usage data calculation result, and the pre-determination result is output as a control instruction.

In particular, the calculation principle mentioned in the calculation of the present invention is to be explained.

Superposition for the same day: When statistically collecting the turn-on of the air conditioner every day in three consecutive weeks, the intervals of the ON time are superimposed. The following requirements are defined for superposition. When data is superimposed for X, A, B, and C, it is required that holidays and non-holidays cannot coexist in X, A, B, and C. Otherwise, special processing should be performed. When X is a holiday, if there are idle days in A, B and C, the data of X should be replaced by the calculation result obtained by stepping back by days to the last adjacent usage day; and if there are no idle days in A, B and C, the calculation results of A, B and C can be used for determination. When X is not a holiday, if there is a holiday in A, B and C, the data of the corresponding group A, B or C should be eliminated, that is, n1, n2 or n3 should be assigned a value accordingly; and if there are no holidays in A, B and C, the calculation results of A, B and C can be used for determination.

Postponement for holidays: If y1 is a holiday, in addition to the special usage of the air conditioner on the day y1, the use of the air conditioner may also be postponed to the morning of the next day y2. Since y2 is not a holiday, if the air conditioner usage data in the morning of y2 is used for determination in the relationship between X, A, B, and C, deviation may be caused in calculation. Therefore, it is provided that when this algorithm encounters such a situation, it is agreed that the holiday time will be postponed to 9:00 the next day, in this case, it will be postponed to x9y2. For the air conditioner usage in the total nine time periods of x1y2, x2y2, ..., x9y2 involved in the holiday postponement, the data of the last week needs to be used for storage.

In this embodiment, the calculation process of air conditioner usage data is as follows:

Based on the principle of superposition for the same day and the principle of postponement for holidays, the air conditioner usage data which is ON in A, B, and C on the same day is recorded. Assume that the data for day n in a week needs to be recorded, then let

$$x1y8 = n1 \times A.x1yn + n2 \times B.x1yn + n3 \times C.x1yn,$$

$$x2y8 = n1 \times A.x2yn + n2 \times B.x2yn + n3 \times C.x2yn,$$

$$x3y8 = n1 \times A.x3yn + n2 \times B.x3yn + n3 \times C.x3yn,$$

…

$$x24y8 = n1 \times A.x24yn + n2 \times B.x24yn + n3 \times C.x24yn,$$

where y8 represents calculated data variable of the current day, yn represents day n in a week, and n is an integer from 1 to 7 representing Monday to Sunday. A.x24yn represents the air conditioner usage data at the 24th hour in day n of the A-th week. It is to be noted that the data of the variable A.x24yn includes only two possibilities, 0 or 1. In order to save chip storage resources, the data type of bit can be used for definition thereof. However, the data of the variable x24y8 includes data between 0 and 1 varying by every 0.01, and at least the data type of Byte (1Byte = 8bit) is to be used for definition thereof.

From the above calculation, the air conditioner usage tendency of the current day can be derived based on the user habits. For example, the closer x1y8 is to 0, the less likely the user is to use the air conditioner at this time, and the closer x1y8 is to 1, the more likely the user is to use the air conditioner at this time.

The process of determining the calculation result based on the randomness index and the regularity index is as follows:

When Pn>Qn (Pn and Qn represent the randomness index and the regularity index of the user on day n in a week), the randomness of the user is stronger. For trade-off between the two contradictory considerations, ensuring good user experience and saving power, this algorithm makes a more preferential determination based on the value of Pn.

x1y8, x2y8, ..., x24y8 are sorted out to take the non-zero values, and then the following calculations and determinations are made on each non-zero value:

when x1y8>1/2-(1/2)×(Pn/100), it is determined that the user will turn on the air conditioner at this time, and it is necessary to enable the preheating function for the compressor in advance. Otherwise, it is considered that the user will not turn on the air conditioner, and it is unnecessary to preheat the compressor before that. Similarly, determination can be made for non-zero values such as x2y8, ..., x24y8 and the like, and the final determination result can be obtained.

For example, when Pn=10, it is considered that the user will turn on the air conditioner when x1y8>0.45. When Pn = 90, it is considered that the user will turn on the air conditioner when x1y8>0.05. The larger the randomness index Pn, the fuzzy control algorithm tends to sacrifice more power to ensure the user experience as much as possible.

When Pn≤Qn, the regularity of the user is stronger. For trade-off between the two contradictory considerations, ensuring good user experience and saving power, this algorithm makes a more preferential determination based on the value of Qn.

x1y8, x2y8, ..., x24y8 are sorted out to take the non-zero values, and then the following calculations and determinations are made on each non-zero value:

When x1y8>1/2 + (1/2)× (Qn/100) (the range of Qn is required to be 0-60, and if Qn>60, then Qn=60 is substituted into the formula for calculation; in order to avoid higher probability required by the algorithm due to strong user repeatability, reducing the anti-interference of the algorithm, it is necessary here to partially define the value of Qn that is substituted into the formula, and the specific definition requirement can be adjusted according to the actual situation), we consider that it is determined that the user will turn on the air conditioner, and it is necessary to enable the preheating function for the compressor in advance. Otherwise, it is considered that the user will not turn on the air conditioner, and it is unnecessary to preheat the compressor in advance. Similarly, determination can be made for non-zero values such as x2y8, ..., x24y8, and the like and the final determination result can be obtained.

For example, when Qn=10, it is considered that the user will turn on the air conditioner when x1y8>0.55. When Qn=90, Qn=60 needs to be substituted into the calculation. That is, when x1y8>0.8, it is considered the user will turn on the air conditioner. The larger the regularity index Qn, the fuzzy control algorithm tends to save more power for energy conservation.

The determination of the time periods among x1y8, x2y8, ..., x24y8 in which it is determined that the preheating function for the compressor needs to be enabled in advance is acquired as the calculation result. The calculation result needs to be processed in conjunction with the current operating status of the air conditioner.

The above data calculation and determination start at 0:00 at the beginning of the day, and the calculation will be completed within a short period of time.

It should be understood that the time of one hour in advance is the preset time in the present invention, and the preset time can be adjusted as appropriate during specific implementation.

For example, assume that the user air conditioner usage data records of A, B, and C are shown in Fig. 5. The gray square represents that the air conditioner usage of the user during this time period is determined to be ON, that is, the corresponding xnyn=1, and the blank square represents that the corresponding xnyn=0. Assume P=5, Q=30, and Monday of the C-th week is determined to be a holiday H(C.y1)=1.

In accordance with the determination method of attribute day, the following calculation results can be obtained in advance.

| Attribute day S | y1 | y2 | y3 | y4 | y5 | y6 | y7 |
|---|---|---|---|---|---|---|---|
| The A-th Week | 1 | 0 | 0 | 0 | 1 | 1 | 1 |
| The B-th Week | 1 | 0 | 0 | 0 | 1 | 1 | 1 |
| The C-th Week | 1(H=1) | 0 (Note) | 0 | 0 | 1 | 1 | 1 |
| Note: Due to the principle of postponement for holidays, the data stored for C.x1y2-C.x9y2 is the air conditioner usage data of the last week. | | | | | | | |

When the time comes to the new week X, calculations can be made based on the above data.

The attribute day is determined based on X=n1*A+n2*B+n3*C. If X≥0.5, it is determined that the current day is a usage day, and S=1. Otherwise, S=0.

We obtain X1=n1*A.y1 + n2*B.y1 + n3*C.y1, where since P≤Q and H(C.y1)=1, and according to the principle of superposition for the same day, and P≤Q, when X is not holiday and there is a holiday in A, B and C, the holiday data is to be eliminated. So n1=0.5, n2=0.5, and n3=0.

X2=n1*A.y2 + n2*B.y2+ n3*C.y2, where since P≤Q, n1=0.34, n2=0.33, and n3=0.33.

It can be calculated that X1=1, X2=0, X3=0, X4=0, X5=1, X6=1, and X7=1. That is, Monday, Friday, Saturday, and Sunday are usage days, and Tuesday, Wednesday, and Thursday are idle days.

Assume that the current day is Monday, and y8 represents the data of Monday of the new week (y8 represents the data of the current day for calculation, which may be any day between Monday and Sunday). The following calculation is performed based on the principle of superposition for the same day (excluding holidays, n1=0.5, n2= 0.5, and n3=0):

$$x1y8 = n1{\times}A.x1y1 + n2{\times}B.x1y1 + n3{\times}C.x1y1 = 1,$$

$$x2y8 = n1{\times}A.x2y1 + n2{\times}B.x2y1 + n3{\times}C.x2y1 = 1,$$

......

$$x24y8 = n1{\times}A.x24y1 + n2{\times}B.x24y1 + n3{\times}C.x24y1 = 0$$

The calculation results are as follows:

| x | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|----|----|----|----|----|----|----|----|----|----|----|----|----|----|----|
| y8 | 1 | 1 | 1 | 1 | 1 | 1 | 1 | 0.5 | 0 | 0 | 0 | 0 | 0 | 0 | 0 | 0 | 0 | 0 | 0 | 0 | 0 | 0 | 0 | 0 |

When $Pn \leq Qn$, and when $x1y8 > 1/2 + (1/2) \times (Qn/100) = 0.65$, it is considered that the user may turn on the compressor.

Based on the above results, within the time periods of $x1y8$, $x2y8$, ..., $x7y8$, determination is to be made of whether to enable the preheating function for the compressor based on the turn-on of the air conditioner by the user.

As another example, assume that it is Friday, and y8 represents the data of Friday of the new week. According to the principle of superposition for the same day, when $P \leq Q$, then n1=0.34, n1=0.33, and n1=0.33.

The calculation results are as follows:

| x | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|----|----|----|----|----|----|----|----|----|------|------|------|----|----|----|
| y8 | 0 | 0 | 0 | 0 | 0 | 0 | 0 | 0 | 0 | 0 | 0 | 0 | 0 | 0 | 0 | 0 | 0 | 0 | 0.66 | 0.67 | 0.67 | 1 | 1 | 1 |

When $Pn \leq Qn$, and when $x1y8 > 1/2 + (1/2) \times (Qn/100) = 0.65$, it is considered that the user may turn on the compressor.

Based on the above results, within the time periods of $x19y8$, $x20y8$, ..., $x24y8$, determination is to be made of whether to enable the preheating function for the compressor based on the turn-on of the air conditioner by the user.

In S403, if the attribute day is an idle day and not a holiday, a disabling control instruction is output; and

in this embodiment, when the attribute day is an idle day and not a holiday, meaning that the user will not use the air conditioner on that day, the control instruction to disable the preheating function of the air conditioner throughout the day is directly output to achieve the effect of energy conservation.

In S404, if the attribute day is an idle day and a holiday, the pre-determination result of the last usage day closest to the current day is acquired and output as a control instruction.

In this embodiment, the method for acquiring the pre-determination result is as described above. When the attribute day is an idle day and a holiday, meaning that the user may use the air conditioner on that day, then according to the principle of superposition for the same day and the principle of postponement for holidays, it is inappropriate to use the data in the data group for the same day as the current day for calculation. In order to ensure the accuracy of pre-determination, it is necessary to acquire the pre-determination result of the usage day closest to the current day that best conforms to the recent usage pattern of the user.

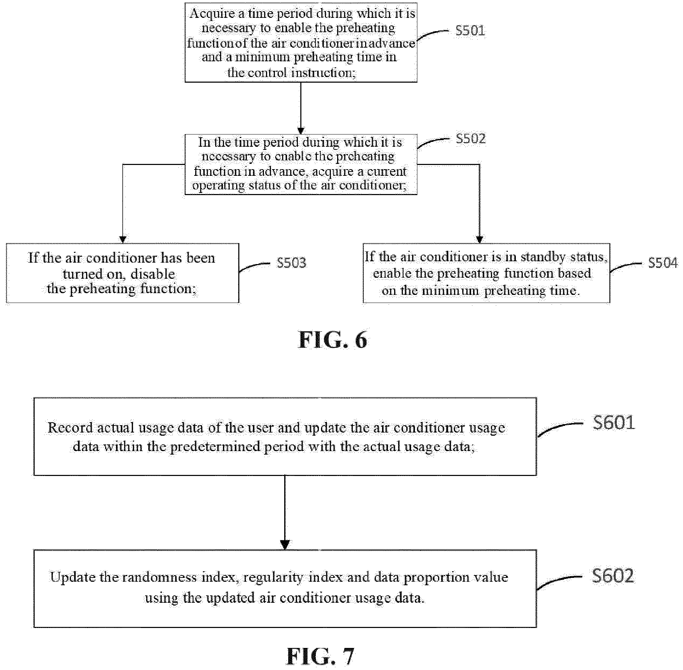

Continue to refer to Fig. 6, which shows a flowchart of the step S60 according to a specific embodiment, including the following steps.

In S501, a time period during which it is necessary to enable the preheating function of the air conditioner in advance and a minimum preheating time are acquired in the control instruction.

In this embodiment, the method for acquiring the time period for enabling the preheating function of the air conditioner in advance is as described above.

In S502, in the time period during which it is necessary to enable the preheating function in advance, a current operating status of the air conditioner is acquired.

In this embodiment, when the time of the day reaches the previous hour to the time period when the fuzzy control algorithm determines that the compressor needs to be turned on in advance (e.g., the algorithm determines that $x18y8$ is the time period when preheating of the compressor needs to be enabled in advance, meaning that the time has reached the hour before the time period of 17:00-18:00, that is, the moment of 16:00), if the air conditioner is in standby status, the preheating function for the compressor will be started immediately at this time. If the air conditioner is in operation, the preheating function for the compressor is disabled, and no further determination is to be made for the next hour (preheating of compressor is not required within one hour after the compressor is shut down). If the compressor is turned on halfway through this hour, the preheating function for the compressor is also disabled accordingly.

In addition, before determining that the preheating function for the compressor is turned on, it is also necessary to determine the time from the last time compressor is shut down to this moment. If the shutdown time of the compressor is less than an hour from this moment, the preheating function for the compressor will not be enabled and the determination time will be postponed for 10 minutes. For example, if it is determined at 16:00 that the last shutdown time of the compressor was 15:30, which is less than an hour from 16:00, then it is determined that the preheating function for the compressor will not be enabled this time and the determination will not be made again until 16:10. By analogy, it should be determined at 16:30 that the preheating function for the compressor should be enabled.

In S503, if the air conditioner has been turned on, the preheating function is disabled; and
in this embodiment, the situation of disabling the preheating function is as described above. By disabling the preheating function when the air conditioner is turned on, energy can be effectively conserved and unnecessary waste of electric energy can be avoided.

In S504, if the air conditioner is in standby status, the preheating function is enabled based on the minimum preheating time.

In this embodiment, enabling of the preheating function and acquisition of the minimum preheating time are as described above. By enabling the preheating function for the minimum preheating time for the air conditioner when the air conditioner is on standby, the air conditioner can be well preheated in advance when the user is to use the air conditioner, allowing the user to turn it on directly for use, thereby improving the use experience for the user.

Furthermore, in this embodiment, the minimum preheating time is acquired in real time. Before enabling the preheating function for the compressor, the minimum preheating time of the air conditioner needs to be acquired first. Under extremely cold conditions, if this method incorrectly pre-estimates the turning on of the compressor, resulting in the situation without preheating in advance before turning on the compressor, the air conditioner will be controlled to first forcibly enable the preheating function to meet the minimum preheating time, and then the compressor is turned on to prevent the compressor from being forcibly turned on and damaged when the freezing time is too long and the effect of the lubricating oil is poor.

Continuing to refer to Fig. 7, after the step S60, the following steps are further included.

In S601, actual usage data of the user is recorded and the air conditioner usage data within the predetermined period is updated with the actual usage data.

In this embodiment, by updating the air conditioner usage data within the predetermined period, the real-time of the data can be effectively ensured and subsequent calculations can be facilitated.

In S602, the randomness index, regularity index and data proportion value are updated using the updated air conditioner usage data.

In this embodiment, by updating the randomness index, regularity index and data proportion value, in the new round of air conditioner control, the updated randomness index, regularity index and data proportion value can be directly used to pre-determine whether to enable the preheating function of the air conditioner in advance, which can effectively ensure the real-time of the data and improve the accuracy of data calculation.

In other implementations of the present invention, the randomness index, regularity index and data proportion value may not be updated, but rather may be directly set in advance based on empiric values. The step S602 includes the following steps:
acquiring the proportion of invalid determinations in total determinations in the updated air conditioner usage data and increasing or decreasing the randomness index accordingly based on whether the proportion meets a preset threshold to update the randomness index, where the total determinations are cases where it is determined based on the control instruction that the preheating function of the air conditioner needs to be enabled, and the invalid determinations are the cases where it is determined based on the control instruction that the preheating function of the air conditioner needs to be enabled but the user does not turn on the air conditioner.

In this embodiment, the P values and Q values are P1, P2, ..., P7 and Q1, Q2, ..., Q7 respectively to represent the P values and Q values from Monday, Tuesday to Sunday. When updating the two values, it is necessary to ensure that all calculated data can correspond to a specific day of the last week. The specific method for updating the randomness index is as follows:
After learning in which time periods among $x_1y_8$, $x_2y_8$, ..., $x_{24}y_8$ it is determined that it is necessary to enable the preheating function for the compressor in advance, the fuzzy control algorithm determines whether it is necessary to enable the preheating function for the compressor in conjunction with the actual operation situation of the compressor. If it is determined that the preheating function for the compressor is to be enabled but the user is not to use the air conditioner within the next hour, then this determination is recorded as an invalid determination. The update to the Pn is determined based on the proportion Pp of the invalid determinations/the total determinations; if Pp>0.8, the P value is increased by two; if 0.6<Pp≤0.8, the P value is increased by two; if 0.4<Pp≤0.6, the P value remains unchanged; and if Pp≤0.4, the P value is decreased by one. Every day, one of the values P1, P2, ..., P7 is updated, but for a certain defined randomness index Pn, its value only changes once a week.

The updated air conditioner usage data is acquired and conditional determination is made on the usage data of all the data groups corresponding to the current day and the regularity index is increased or decreased accordingly based on the result of the conditional determination to update the regularity index.

In this embodiment, the specific method for updating the regularity index is as follows.

When the user habit data of three weeks, A, B, C, and X have been completely stored, storing new data will cause the oldest data to be discarded. Before discarding the data, determination is made on A, B, C, and X, where X represents a day this week, A, B, and C respectively represent a day in the last week, a day in the week before the last week, and a day in the week before the last two weeks. The data used by X, A, B, and C in determination are all for the same day in a week. Assuming that the calculated day X is Monday, the data of Monday in the A-th week, Monday in the B-th week and Monday in the C-th week are statistically collected. If these four data are all the same, then Q is increased by 2; if three consecutive data are the same, then Q is increased by 1; if only two consecutive data are the same, then Q remains unchanged; and if there is only one consecutive data, such as the case where A, B, C, X = 1,0,1,0, then Q is decreased by 1. Every day, one of the values Q1, Q2, ..., Q7 is updated, but for a certain defined regularity index Qn, its value only changes once a week.

The updated randomness index and regularity index are acquired and compared, if the randomness index is greater, the data proportion value is calculated and updated based on a preset formula, and if the regularity index is greater, the data proportion value is updated to a preset initial value.

In this embodiment, the data proportion value is calculated as follows:

If P>Q, then

$$n1=(P/100)\times(2/3) + 1/3,$$

$$n2=(1-n1)\times [(P/100)\times(1/2) +1/2)],$$

and

$$n3 = 1-n1-n2,$$

where n1, n2, and n3 are all assumed to be two-place decimals
Assuming P=5, then n1=0.37, n2=0.34, and n3=0.3.
Assuming P=60, then n1=0.73, n2=0.22, and n3=0.05.

The greater the P value, the greater the randomness of the user habit, so the data from the previous week will account for a larger proportion.

If P≤Q, then n1=0.34, n1=0.33, and n1=0.33. The greater the Q value, the greater the regularity of the user habit, so the proportions of the three weeks of data should be as equal as possible.

The calculation formulas of n1, n2 and n3 require special treatment in the following special cases:

When X is not a holiday, if there is a holiday in A, B, and C, the data of the corresponding A, B, or C should be eliminated. When the data of A, B, and C is less than that corresponding to three weeks, the corresponding data should be eliminated.

When A, B, and C only record two groups of data, or when there is one holiday in A, B, and C, the corresponding n=0. Assume A is a holiday, and B and C are not holidays, then:

$$n1= 0 \quad n1=0$$

$$n2= [(P/100)\times(1/2) +1/2)] \text{ or } n2=0.5$$

$$n3=1-n2 \quad (P>Q) \quad n3=0.5 \ (P\leq Q)$$

When A, B, and C only record one group of data, or when there are two holidays in A, B, and C, the corresponding n=0. Assume A and B are holidays, and C is not a holiday, then:

$$n1= 0$$

$$n2= 0$$

$$n3 = 1$$

When there are three holidays in A, B, and C, since it is impossible in reality that the same day in three consecutive weeks is a holiday, there is no need to consider this situation. However, in order to achieve a closed-loop determination system, when designing the software, normal calculations of n1, n2, and n3 can be used to make determinations, and special processing is not required for holidays. It should be understood that this is only done to form a closed loop in the software and avoid occurrence of unconsidered determination processes.

In this embodiment, the ranges of the randomness index and the regularity index are both 0-100. By limiting the ranges of the randomness index and the regularity index, the calculation can be simplified and the response speed can be improved. During the specific implementation, in order to ensure accuracy and convenience of the calculation, the above randomness index and regularity index are both integers in the calculation formulas.

Those of ordinary skill in the art can understand that all or part of the processes in the methods of the above embodiments can be implemented by instructing relevant hardware through a computer program. The computer program can be stored in a computer-readable storage medium. When executed, the program may include the processes of the above method embodiments. Among them, the aforementioned storage medium may be a non-volatile storage medium such as a magnetic disk, a compact disc, and a Read-Only Memory (ROM), or a Random Access Memory (RAM), or the like.

It should be understood that although various steps in the flowcharts of the accompanying drawings are shown in sequence as indicated by arrows, these steps are not necessarily performed in the order indicated by arrows. Unless explicitly stated herein, the performance of these steps is not strictly limited in the order, and they can be performed in other orders. Moreover, at least some of the steps in the flowcharts of the accompanying drawings may include multiple sub-steps or multiple stages. These sub-steps or stages are not necessarily completely performed at the same time, but may be performed at different times, and they are also not necessarily performed sequentially, but may be performed in turn or alternately with other steps or at least some sub-steps or stages of other steps.

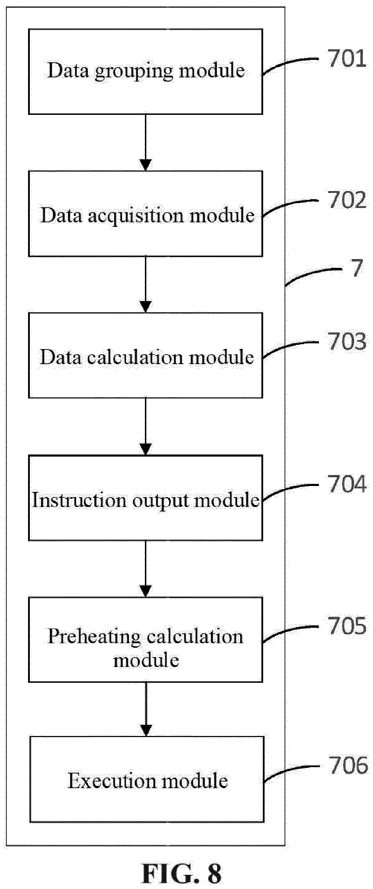

With further reference to Fig. 8, as an implementation of the method shown in Fig. 1 above, the present invention provides an embodiment of a control apparatus for a preheating function of an air conditioner. This device embodiment corresponds to the method embodiment shown in Fig. 1. The device can be applied in various electronic devices.

As shown in Fig. 8, the control apparatus 7 for a preheating function of an air conditioner in this embodiment includes: a data grouping module 701, a data acquisition module 702, a data calculation module 703, an instruction output module 704, a preheating calculation module 705, and an execution module 706. Specifically,

the data grouping module 701 is configured to acquire air conditioner usage data of a user within a predetermined period, and divide the air conditioner usage data into different data groups on a weekly basis;

the data acquisition module 702 is configured to acquire a preset randomness index, regularity index and data proportion value representing a usage pattern of the user;

the data calculation module 703 is configured to calculate a user habit output value representing a usage habit of the user based on the data groups and the data proportion value;

the instruction output module 704 is configured to determine an attribute day to which the current day belongs based on the user habit output value and a preset calendar system, and output a corresponding control instruction based on the randomness index, the regularity index and the attribute day determination result;

the preheating calculation module 705 is configured to detect a current temperature of the air conditioner in real time, calculate a preheating score of the air conditioner based on the current temperature, and acquire a minimum preheating time of the air conditioner based on the preheating score; and

the execution module 706 is configured to determine and execute enabling and disabling of the preheating function of the air conditioner based on the control instruction and the current operating status of the air conditioner.

In this embodiment, by providing a system module corresponding to the control method for a preheating function of an air conditioner, the air conditioner usage habit of the user can be effectively determined, so as to accordingly adjust the enabling and disabling of the preheating function of the air conditioner to achieve conservation of electric energy.

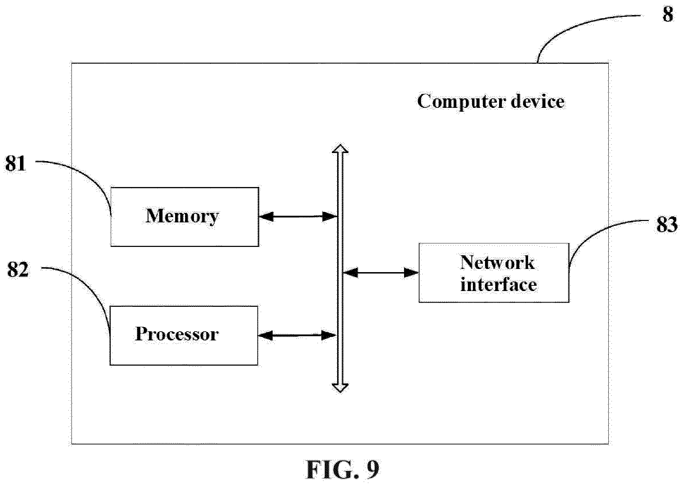

In order to solve the above technical problems, embodiments of the present invention further provide a computer device. Please refer to Fig. 9 for details. Fig. 9 is a basic structural block diagram of the computer device according to this embodiment.

The computer device 8 includes a memory 81, a processor 82, and a network interface 83 that are communicatively connected to each other through a system bus. It should be noted that only the computer device 8 having the components 81-83 is shown in the figure, but it should be understood that it is not necessary to implement all the components shown, and more or less components may be implemented instead. Those skilled in the art can understand that the computer device here is a device that can automatically perform numerical calculations and/or information processing according to preset or stored instructions. Its hardware includes, but is not limited to, a microprocessor, an Application Specific Integrated Circuit (ASIC), a Field-Programmable Gate Array (FPGA), a Digital Signal Processor (DSP), an embedded device, or the like.

The computer device may be a desktop computer, a notebook, a PDA, a cloud server and other computing devices. The computer device can perform human-computer interaction with the user through a keyboard, a mouse, a remote control, a touch panel, a voice control device, or the like.

The memory 81 includes at least one type of readable storage medium. The readable storage medium includes a flash memory, a hard disk, a multimedia card, a card-type memory (e.g., SD or DX memory, or the like), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disk, a compact disc, or the like. In some embodiments, the memory 81 may be an internal storage unit of the computer device 8, such as a hard disk or memory of the computer device 8. In some other embodiments, the memory 81 may also be an external storage device of the computer device 8, such as a plug-in hard disk, a Smart Media Card (SMC), a Secure Digital (SD) card, a Flash Card or the like equipped on the computer device 8. Of course, the memory 81 may also include both the internal storage unit and the external storage device of the computer device 8. In this embodiment, the memory 81 is typically used to store the operating system and various application software installed on the computer device 8, such as the program code of the control method for a preheating function of an air conditioner. In addition, the memory 81 can also be used to temporarily store various types of data that have been output or are to be output.

In some embodiments, the processor 82 may be a Central Processing Unit (CPU), a controller, a microcontroller, a microprocessor, or other data processing chips. The processor 82 is typically used to control the overall operation of the computer device 8. In this embodiment, the processor 82 is used to run the program code or process data stored in the memory 81, for example, run the program code of the control method for a preheating function of an air conditioner.

The network interface 83 may include a wireless network interface or a wired network interface. The network interface 83 is typically used to establish a communicative connection between the computer device 8 and other electronic devices.

The present invention further provides another implementation, that is, a computer-readable storage medium. The computer-readable storage medium has a control program for a preheating function of an air conditioner stored therein. The control program for a preheating function of an air conditioner can be executed by at least one processor to cause the at least one processor to execute the steps of the control method for a preheating function of an air conditioner as described above.

From the above description of the implementations, those skilled in the art can clearly understand that the methods of the above embodiments can be implemented by means of software plus the necessary general hardware platform. Of course, they can also be implemented by hardware, but in many cases the former is a better implementation. Based on this understanding, the essential part or the part that contributes to the related art of the technical solution of the present invention can be embodied in the form of a software product. The computer software product is stored in a storage medium (e.g., a ROM/RAM, a disk, or a compact disc) and includes several instructions to cause a terminal device (which may be a mobile phone, a computer, a server, an air conditioner, a network device, or the like) to execute the methods described in various embodiments of the present invention.

Obviously, the embodiments described above are only some of the embodiments of the present invention, rather than all the embodiments. The preferred embodiments of the present invention are given in the drawings, but do not limit the patent scope of the present invention as set out in the appended claims. The present invention may be embodied in many different forms; rather, these embodiments are provided in order to provide thorough and comprehensive understanding of the present invention. Although the present invention has been described in detail with reference to the foregoing embodiments, those skilled in the art can still modify the technical solutions recited in the foregoing specific implementations, or make equivalent substitutions for some of the technical features thereof. Any equivalent structure made using the contents of the specification and drawings of the present invention and directly or indirectly used in other related technical fields shall similarly fall within the scope of patent protection of the present invention, which is as set out in the appended claims.

**Claims**

1.    A control method for a preheating function of an air conditioner, comprising the following steps:

acquiring (S10) air conditioner usage data of a user within a predetermined period, and dividing the air conditioner usage data into different data groups on a weekly basis;
acquiring (S20) a preset randomness index, regularity index and data proportion value representing a usage pattern of the user;

calculating (S30) a user habit output value representing a usage habit of the user based on the data groups and the data proportion value;

determining (S40) an attribute day to which a current day belongs based on the user habit output value and a preset calendar system, and outputting a corresponding control instruction based on the randomness index, the regularity index and the attribute day determination result;

detecting (S50) a current temperature of the air conditioner in real time, calculating a preheating score of the air conditioner based on the current temperature, and acquiring a minimum preheating time of the air conditioner based on the preheating score; and

determining and executing (S60) enabling and disabling of the preheating function of the air conditioner based on the control instruction, the minimum preheating time and a current operating status of the air conditioner.

2. The control method for a preheating function of an air conditioner according to claim 1, wherein the step of acquiring (S10) air conditioner usage data of a user within a predetermined period, and dividing the air conditioner usage data into different data groups on a weekly basis specifically comprises:

defining (S101) a determination time zone, the determination time zone being every time period of an hour every day within a week;

recording and saving (S102) the air conditioner usage data within the predetermined period, the air conditioner usage data comprising the enabling and disabling of the air conditioner in the determination time zone; and

dividing (S103) the saved air conditioner usage data within the predetermined period into different data groups on a weekly basis.

3. The control method for a preheating function of an air conditioner according to claim 1 or 2, wherein the attribute day comprises idle days, usage days and holidays; and the step of determining (S40) an attribute day to which the current day belongs based on the user habit output value and a preset calendar system and outputting a corresponding control instruction based on the attribute day determination result specifically comprises:

acquiring (S401) a user habit output value, and determining the attribute day to which the current day belongs based on the user habit output value and the preset calendar system;

if the attribute day is a usage day, calculating (S402) the air conditioner usage data on that day based on the data groups and the data proportion value while pre-determining whether to enable the preheating function of the air conditioner in advance based on the randomness index, the regularity index and the air conditioner usage data calculation result, and outputting the pre-determination result as a control instruction;

if the attribute day is an idle day and not a holiday, outputting (S403) a disabling control instruction; and

if the attribute day is an idle day and a holiday, acquiring (S404) the pre-determination result of the last usage day closest to the current day and outputting it as a control instruction.

4. The control method for a preheating function of an air conditioner according to any preceding claim, wherein the step of determining and executing (S60) enabling and disabling of the preheating function of the air conditioner based on the control instruction, the minimum preheating time and a current operating status of the air conditioner specifically comprises:

obtaining (S501) a time period during which it is necessary to enable the preheating function of the air conditioner in advance and the minimum preheating time in the control instruction;

in the time period during which it is necessary to enable the preheating function in advance, acquiring (S502) the current operating status of the air conditioner;

if the air conditioner has been turned on, disabling (S503) the preheating function; and

if the air conditioner is in standby status, enabling (S504) the preheating function based on the minimum preheating time.

5. The control method for a preheating function of an air conditioner according to any preceding claim, wherein after the step of determining and executing (S60) enabling and disabling of the preheating function of the air conditioner based on the control instruction, the minimum preheating time and a current operating status of the air conditioner, the method further comprises:

recording (S601) actual usage data of the user and updating the air conditioner usage data within the predetermined period with the actual usage data; and

updating (S602) the randomness index, the regularity index and the data proportion value using the updated air conditioner usage data.

6. The control method for a preheating function of an air conditioner according to claim 5, wherein the step of updating the air conditioner usage data within the predetermined period with the actual usage data specifically comprises: saving the actual usage data as the air conditioner usage data of the current day and deleting the air conditioner usage data farthest from the current day.

7. The control method for a preheating function of an air conditioner according to claim 5 or 6, wherein the step of updating (S602) the randomness index, the regularity index and the data proportion value using the updated air conditioner usage data specifically comprises:

acquiring the proportion of invalid determinations in total determinations in the updated air conditioner usage data and increasing or decreasing the randomness index accordingly based on whether the proportion meets a preset threshold to update the randomness index, where the total determinations are cases where it is determined based on the control instruction that the preheating function of the air conditioner needs to be enabled, and the invalid determinations are cases where it is determined based on the control instruction that the preheating function of the air conditioner needs to be enabled but the user does not turn on the air conditioner; acquiring the updated air conditioner usage data and performing conditional determination on the usage data of all data groups corresponding to the current day, and increasing or decreasing the regularity index accordingly based on the result of the conditional determination to update the regularity index; and acquiring the updated randomness index and regularity index and comparing them, if the randomness index is greater, calculating and updating the data proportion value based on a preset formula, and if the regularity index is greater, updating the data proportion value to a preset value.

8. A control apparatus (7) for a preheating function of an air conditioner, comprising:

a data grouping module (701) configured to acquire air conditioner usage data of a user within a predetermined period, and divide the air conditioner usage data into different data groups on a weekly basis; a data acquisition module (702) configured to acquire a preset randomness index, regularity index and data proportion value representing a usage pattern of the user; a data calculation module (703) configured to calculate a user habit output value representing a usage habit of the user based on the data groups and the data proportion value; an instruction output module (704) configured to determine an attribute day to which the current day belongs based on the user habit output value and a preset calendar system, and output a corresponding control instruction based on the randomness index, the regularity index and the attribute day determination result; a preheating calculation module (705) configured to detect a current temperature of the air conditioner in real time, calculate a preheating score of the air conditioner based on the current temperature, and acquire a minimum preheating time of the air conditioner based on the preheating score; and an execution module (706) configured to determine and execute enabling and disabling of the preheating function of the air conditioner based on the control instruction, the minimum preheating time and a current operating status of the air conditioner.

9. A computer device (8) comprising a memory (81) and a processor (82), the memory having a computer program stored therein, the processor (82), when executing the computer program, implementing the steps of the control method for a preheating function of an air conditioner according to any of claims 1-7.

10. A computer-readable storage medium having a computer program stored therein that, when executed by a processor, implements the steps of the control method for a preheating function of an air conditioner according to any of claims 1-7.

**Patentansprüche**

1. Steuerungsverfahren für eine Vorwärmfunktion einer Klimaanlage, umfassend die folgenden Schritte:

Erfassen (S10) von Klimaanlagen-Nutzungsdaten eines Benutzers innerhalb eines vorbestimmten Zeitraums und Aufteilen der Klimaanlagen-Nutzungsdaten in verschiedene Datengruppen auf wöchentlicher Basis; Erfassen (S20) eines voreingestellten Zufallsindexes, eines Regelmäßigkeitsindexes und eines Datenanteilwertes, die ein Nutzungsmuster des Benutzers darstellen;

Berechnen (S30) eines Benutzergewohnheits-Ausgabewerts, der eine Nutzungsgewohnheit des Benutzers darstellt, basierend auf den Datengruppen und dem Datenanteilswert;

Bestimmen (S40) eines Attributtages, zu dem ein aktueller Tag gehört, basierend auf dem Benutzergewohnheits-Ausgabewert und einem voreingestellten Kalendersystem, und Ausgeben einer entsprechenden Steueranweisung basierend auf dem Zufallsindex, dem Regelmäßigkeitsindex und dem Attributtag-Bestimmungsergebnis;

Erfassen (S50) einer aktuellen Temperatur der Klimaanlage in Echtzeit, Berechnen eines Vorwärmwertes der Klimaanlage basierend auf der aktuellen Temperatur und Erfassen einer Mindestvorwärmzeit der Klimaanlage basierend auf dem Vorwärmwert; und

Bestimmen und Ausführen (S60) eines Aktivierens und Deaktivierens der Vorwärmfunktion der Klimaanlage basierend auf der Steueranweisung, der Mindestvorwärmzeit und einem aktuellen Betriebszustand der Klimaanlage.

2. Steuerungsverfahren für eine Vorwärmfunktion einer Klimaanlage nach Anspruch 1, wobei der Schritt des Erfassens (S10) von Klimaanlagen-Nutzungsdaten eines Benutzers innerhalb eines vorbestimmten Zeitraums und des Aufteilens der Klimaanlagen-Nutzungsdaten in verschiedene Datengruppen auf wöchentlicher Basis insbesondere umfasst:

Definieren (S101) einer Bestimmungszeitzone, wobei die Bestimmungszeitzone jeden Zeitraum einer Stunde an jedem Tag innerhalb einer Woche ist;

Aufzeichnen und Speichern (S102) der Klimaanlagen-Nutzungsdaten innerhalb des vorbestimmten Zeitraums, wobei die Klimaanlagen-Nutzungsdaten das Aktivieren und Deaktivieren der Klimaanlage in der Bestimmungszeitzone umfassen; und

Aufteilen (S103) der gespeicherten Klimaanlagen-Nutzungsdaten innerhalb des vorgegebenen Zeitraums in verschiedene Datengruppen auf wöchentlicher Basis.

3. Steuerungsverfahren für eine Vorwärmfunktion einer Klimaanlage nach Anspruch 1 oder 2, wobei der Attributtag Ruhetage, Nutzungstage und Feiertage umfasst; und der Schritt des Bestimmens (S40) eines Attributtags, zu dem der aktuelle Tag gehört, basierend auf dem Benutzergewohnheits-Ausgabewert und einem voreingestellten Kalendersystem und des Ausgebens einer entsprechenden Steueranweisung basierend auf dem Attributtag-Bestimmungsergebnis insbesondere umfasst:

Erfassen (S401) eines Benutzergewohnheits-Ausgabewerts und Bestimmen des Attributtags, zu dem der aktuelle Tag gehört, basierend auf dem Benutzergewohnheits-Ausgabewert und dem voreingestellten Kalendersystem;

wenn der Attributtag ein Nutzungstag ist, Berechnen (S402) der Klimaanlagen-Nutzungsdaten an diesem Tag basierend auf den Datengruppen und dem Datenanteilswert, während basierend auf dem Zufallsindex, dem Regelmäßigkeitsindex und dem Klimaanlagen-Nutzungsdaten-Berechnungsergebnis vorbestimmt wird, ob die Vorwärmfunktion der Klimaanlage im Voraus aktiviert wird, und Ausgeben des Vorbestimmungsergebnisses als eine Steueranweisung;

wenn der Attributtag ein Ruhetag und kein Feiertag ist, Ausgeben (S403) einer Deaktivierungssteueranweisung; und

wenn der Attributtag ein Ruhetag und ein Feiertag ist, Erfassen (S404) des Vorbestimmungsergebnisses des letzten Nutzungstages, der dem aktuellen Tag am nächsten liegt, und Ausgeben davon als eine Steueranweisung.

4. Steuerungsverfahren für eine Vorwärmfunktion einer Klimaanlage nach einem der vorstehenden Ansprüche, wobei der Schritt des Bestimmens und Ausführens (S60) eines Aktivierens und Deaktivierens der Vorwärmfunktion der Klimaanlage basierend auf der Steueranweisung, der Mindestvorwärmzeit und eines aktuellen Betriebszustands der Klimaanlage insbesondere umfasst:

Erhalten (S501) eines Zeitraums, in dem es notwendig ist, die Vorwärmfunktion der Klimaanlage im Voraus zu aktivieren, und der Mindestvorwärmzeit in der Steueranweisung;

in dem Zeitraum, in dem es notwendig ist, die Vorwärmfunktion im Voraus zu aktivieren, Erfassen (S502) des aktuellen Betriebszustands der Klimaanlage;

wenn die Klimaanlage eingeschaltet wurde, Deaktivieren (S503) der Vorwärmfunktion; und

wenn sich die Klimaanlage in einem Bereitschaftszustand befindet, Aktivieren (S504) der Vorwärmfunktion basierend auf der Mindestvorwärmzeit.

5. Steuerungsverfahren für eine Vorwärmfunktion einer Klimaanlage nach einem der vorstehenden Ansprüche, wobei das Verfahren nach dem Schritt des Bestimmens und Ausführens (S60) eines Aktivierens und Deaktivierens der Vorwärmfunktion der Klimaanlage basierend auf der Steueranweisung, der Mindestvorwärmzeit und einem aktuellen Betriebszustand der Klimaanlage ferner umfasst:

Aufzeichnen (S601) von tatsächlichen Nutzungsdaten des Benutzers und Aktualisieren der Klimaanlagen-Nutzungsdaten innerhalb des vorbestimmten Zeitraums mit den tatsächlichen Nutzungsdaten; und
Aktualisieren (S602) des Zufallsindexes, des Regelmäßigkeitsindexes und des Datenanteilswertes unter Verwendung der aktualisierten Klimaanlagen-Nutzungsdaten.

6. Steuerungsverfahren für eine Vorwärmfunktion einer Klimaanlage nach Anspruch 5, wobei der Schritt des Aktualisierens der Klimaanlagen-Nutzungsdaten innerhalb des vorbestimmten Zeitraums mit den tatsächlichen Nutzungsdaten insbesondere umfasst:
Speichern der tatsächlichen Nutzungsdaten als die Klimaanlagen-Nutzungsdaten des aktuellen Tages und Löschen der Klimaanlagen-Nutzungsdaten, die am weitesten von dem aktuellen Tag entfernt sind.

7. Steuerungsverfahren für eine Vorwärmfunktion einer Klimaanlage nach Anspruch 5 oder 6, wobei der Schritt des Aktualisierens (S602) des Zufallsindexes, des Regelmäßigkeitsindexes und des Datenanteilswertes unter Verwendung der aktualisierten Klimaanlagen-Nutzungsdaten insbesondere umfasst:

Erfassen des Anteils ungültiger Bestimmungen an Gesamtbestimmungen in den aktualisierten Klimaanlagen-Nutzungsdaten und entsprechendes Erhöhen oder Verringern des Zufallsindexes darauf basierend, ob der Anteil einen voreingestellten Schwellenwert erreicht, um den Zufallsindex zu aktualisieren, wobei die Gesamtbestimmungen Fälle sind, in denen basierend auf der Steueranweisung bestimmt wird, dass die Vorwärmfunktion der Klimaanlage aktiviert werden muss, und die ungültigen Bestimmungen Fälle sind, in denen basierend auf der Steueranweisung bestimmt wird, dass die Vorwärmfunktion der Klimaanlage aktiviert werden muss, aber der Benutzer die Klimaanlage nicht einschaltet;
Erfassen der aktualisierten Klimaanlagen-Nutzungsdaten und Durchführen einer bedingten Bestimmung der Nutzungsdaten aller Datengruppen, die dem aktuellen Tag entsprechen, und entsprechendes Erhöhen oder Verringern des Regelmäßigkeitsindexes basierend auf dem Ergebnis der bedingten Bestimmung, um den Regelmäßigkeitsindex zu aktualisieren; und
Erfassen des aktualisierten Zufallsindexes und des Regelmäßigkeitsindexes und Vergleichen derselben, wenn der Zufallsindex größer ist, Berechnen und Aktualisieren des Datenanteilswertes basierend auf einer voreingestellten Formel, und wenn der Regelmäßigkeitsindex größer ist, Aktualisieren des Datenanteilswertes auf einen voreingestellten Wert.

8. Steuerungsvorrichtung (7) für eine Vorwärmfunktion einer Klimaanlage, umfassend:

ein Datengruppierungsmodul (701), das konfiguriert ist, um Klimaanlagen-Nutzungsdaten eines Benutzers innerhalb eines vorbestimmten Zeitraums zu erfassen und die Klimaanlagen-Nutzungsdaten in verschiedene Datengruppen auf wöchentlicher Basis aufzuteilen;
ein Datenerfassungsmodul (702), das konfiguriert ist, um einen voreingestellten Zufallsindex, einen Regelmäßigkeitsindex und einen Datenanteilwert zu erfassen, die ein Nutzungsmuster des Benutzers darstellen;
ein Datenberechnungsmodul (703), das konfiguriert ist, um einen Benutzergewohnheits-Ausgabewert, der eine Nutzungsgewohnheit des Benutzers darstellt, basierend auf den Datengruppen und dem Datenanteilswert zu berechnen;
ein Anweisungsausgabemodul (704), das konfiguriert ist, um einen Attributtag, zu dem der aktuelle Tag gehört, basierend auf dem Benutzergewohnheits-Ausgabewert und einem voreingestellten Kalendersystem zu bestimmen und eine entsprechende Steueranweisung basierend auf dem Zufallsindex, dem Regelmäßigkeitsindex und dem Attributtag-Bestimmungsergebnis auszugeben;
ein Vorwärmungsberechnungsmodul (705), das konfiguriert ist, um eine aktuelle Temperatur der Klimaanlage in Echtzeit zu erfassen, einen Vorwärmwert der Klimaanlage basierend auf der aktuellen Temperatur zu berechnen und eine Mindestvorwärmzeit der Klimaanlage basierend auf dem Vorwärmwert zu erfassen; und
ein Ausführungsmodul (706), das konfiguriert ist, um ein Aktivieren und Deaktivieren der Vorwärmfunktion der Klimaanlage basierend auf der Steueranweisung, der Mindestvorwärmzeit und einem aktuellen Betriebszustand der Klimaanlage zu bestimmen und auszuführen.

**9.** Computervorrichtung (8), umfassend einen Speicher (81) und einen Prozessor (82), wobei in dem Speicher ein Computerprogramm gespeichert ist, wobei der Prozessor (82), wenn er das Computerprogramm ausführt, die Schritte des Steuerungsverfahrens für eine Vorwärmfunktion einer Klimaanlage nach einem der Ansprüche 1 bis 7 umsetzt.

**10.** Computerlesbares Speichermedium mit einem darauf gespeicherten Computerprogramm, das, wenn es von einem Prozessor ausgeführt wird, die Schritte des Steuerungsverfahrens für eine Vorwärmfunktion einer Klimaanlage nach einem der Ansprüche 1 bis 7 umsetzt.

**Revendications**

**1.** Procédé de commande d'une fonction de préchauffage d'un climatiseur, comprenant les étapes suivantes :

acquisition (S10) de données d'utilisation du climatiseur d'un utilisateur au cours d'une période prédéterminée, et division des données d'utilisation du climatiseur en différents groupes de données sur une base hebdomadaire ;
acquisition (S20) d'un indice d'aléa prédéfini, un indice de régularité et une valeur de proportion de données représentant un modèle d'utilisation de l'utilisateur ;
calcul (S30) d'une valeur de sortie d'habitude d'utilisateur représentant une habitude d'utilisation de l'utilisateur sur la base des groupes de données et de la valeur de proportion de données ;
détermination (S40) d'un jour d'attribut auquel appartient un jour actuel sur la base de la valeur de sortie d'habitude de l'utilisateur et d'un système de calendrier prédéfini, et émission d'une instruction de commande correspondante sur la base de l'indice d'aléa, de l'indice de régularité et du résultat de détermination du jour d'attribut ;
détection (S50) d'une température actuelle du climatiseur en temps réel, calcul d'un score de préchauffage du climatiseur sur la base de la température actuelle et acquisition d'un temps de préchauffage minimum du climatiseur en fonction du score de préchauffage ; et
détermination et exécution (S60) de l'activation et la désactivation de la fonction de préchauffage du climatiseur sur la base de l'instruction de commande, du temps de préchauffage minimum et d'un état de fonctionnement actuel du climatiseur.

**2.** Procédé de commande d'une fonction de préchauffage d'un climatiseur selon la revendication 1, dans lequel l'étape d'acquisition (S10) des données d'utilisation du climatiseur d'un utilisateur sur une période prédéterminée et leur division hebdomadaire en différents groupes de données comprennent spécifiquement :

la définition (S101) d'une zone temporelle de détermination, la zone temporelle de détermination étant chaque période de temps d'une heure chaque jour dans une semaine ;
l'enregistrement et la sauvegarde (S102) des données d'utilisation du climatiseur au cours de la période prédéterminée, les données d'utilisation du climatiseur comprenant l'activation et la désactivation du climatiseur dans la zone temporelle de détermination ; et
la division (S103) des données d'utilisation du climatiseur enregistrées au cours de la période prédéterminée en différents groupes de données sur une base hebdomadaire.

**3.** Procédé de commande d'une fonction de préchauffage d'un climatiseur selon la revendication 1 ou 2, dans lequel le jour d'attribut comprend les jours d'inactivité, les jours d'utilisation et les jours fériés ; et l'étape de détermination (S40) du jour d'attribut auquel appartient le jour courant, sur la base de la valeur de sortie des habitudes de l'utilisateur et d'un système de calendrier prédéfini, et d'émission d'une instruction de commande correspondante sur la base du résultat de la détermination du jour d'attribut, comprend spécifiquement :

l'acquisition (S401) d'une valeur de sortie d'habitude d'utilisateur et la détermination du jour d'attribut auquel appartient le jour actuel sur la base de la valeur de sortie d'habitude d'utilisateur et du système de calendrier prédéfini ; si le jour d'attribut est un jour d'utilisation, calcul (S402) des données d'utilisation du climatiseur ce jour-là sur la base des groupes de données et de la valeur de proportion de données tout en prédéterminant s'il faut activer la fonction de préchauffage du climatiseur à l'avance sur la base de l'indice d'aléa, de l'indice de régularité et du résultat du calcul des données d'utilisation du climatiseur, et en générant le résultat de la prédétermination sous la forme d'une instruction de commande ;
si le jour d'attribut est un jour d'inactivité et non un jour férié, sortie (S403) d'une instruction de commande de désactivation ; et

si le jour d'attribut est un jour d'inactivité et un jour férié, acquisition (S404) du résultat de prédétermination du dernier jour d'utilisation le plus proche du jour actuel et sa sortie sous forme d'instruction de commande.

4. Procédé de commande d'une fonction de préchauffage d'un climatiseur selon l'une quelconque des revendications précédentes, dans lequel l'étape de détermination et d'exécution (S60) de l'activation et la désactivation de la fonction de préchauffage du climatiseur sur la base de l'instruction de commande, du temps de préchauffage minimum et d'un état de fonctionnement actuel du climatiseur comprend spécifiquement :

l'obtention (S501) d'une période de temps pendant laquelle il est nécessaire d'activer à l'avance la fonction de préchauffage du climatiseur et le temps de préchauffage minimum dans l'instruction de commande ;
dans la période de temps pendant laquelle il est nécessaire d'activer la fonction de préchauffage à l'avance, l'acquisition (S502) de l'état de fonctionnement actuel du climatiseur ;
si le climatiseur a été allumé, la désactivation (S503) de la fonction de préchauffage ; et
si le climatiseur est en état de veille, activation (S504) de la fonction de préchauffage sur la base du temps de préchauffage minimum.

5. Procédé de commande d'une fonction de préchauffage d'un climatiseur selon l'une quelconque des revendications précédentes, dans lequel l'étape de détermination et d'exécution (S60) de l'activation et la désactivation de la fonction de préchauffage du climatiseur sur la base de l'instruction de commande, du temps de préchauffage minimum et d'un état de fonctionnement actuel du climatiseur comprend spécifiquement :

l'enregistrement (S601) de données d'utilisation réelles de l'utilisateur et mise à jour des données d'utilisation du climatiseur au cours de la période prédéterminée avec les données d'utilisation réelles ; et
mise à jour (S602) de l'indice d'aléa, de l'indice de régularité et de la valeur de proportion de données à l'aide des données d'utilisation du climatiseur mises à jour.

6. Procédé de commande d'une fonction de préchauffage d'un climatiseur selon la revendication 5, dans lequel l'étape de mise à jour des données d'utilisation du climatiseur pendant la période prédéterminée avec les données d'utilisation réelles comprend spécifiquement :
l'enregistrement des données d'utilisation réelles en tant que données d'utilisation du climatiseur du jour en cours et la suppression des données d'utilisation du climatiseur les plus éloignées du jour en cours.

7. Procédé de commande d'une fonction de préchauffage d'un climatiseur selon la revendication 5 ou 6, dans lequel l'étape de mise à jour (S602) de l'indice d'aléa du climatiseur d'un utilisateur sur une période prédéterminée et leur division hebdomadaire en différents groupes de données comprennent spécifiquement :

l'acquisition de la proportion de déterminations invalides dans les déterminations totales dans les données d'utilisation du climatiseur mises à jour et l'augmentation ou diminution de l'indice d'aléa en conséquence selon que la proportion atteint un seuil prédéfini pour mettre à jour l'indice d'aléa, où les déterminations totales sont des cas où il est déterminé sur la base de l'instruction de commande que la fonction de préchauffage du climatiseur doit être activée, et les déterminations invalides sont des cas où il est déterminé sur la base de l'instruction de contrôle que la fonction de préchauffage du climatiseur doit être activée mais que l'utilisateur n'allume pas le climatiseur ;
l'acquisition des données d'utilisation du climatiseur mises à jour et l'exécution d'une détermination conditionnelle sur les données d'utilisation de tous les groupes de données correspondant au jour en cours, et l'augmentation ou diminution de l'indice de régularité en conséquence sur la base du résultat de la détermination conditionnelle pour mettre à jour l'indice de régularité ; et
l'acquisition de l'indice d'aléa et de l'indice de régularité mis à jour et leur comparaison, si l'indice d'aléa est supérieur, le calcul et la mise à jour de la valeur de proportion de données sur la base d'une formule prédéfinie, et si l'indice de régularité est supérieur, la mise à jour de la valeur de proportion de données à une valeur prédéfinie.

8. Appareil de commande (7) d'une fonction de préchauffage d'un climatiseur, comprenant :

un module de regroupement de données (701) configuré pour acquérir des données d'utilisation du climatiseur d'un utilisateur au cours d'une période prédéterminée, et diviser les données d'utilisation du climatiseur en différents groupes de données sur une base hebdomadaire ;
un module d'acquisition de données (702) configuré pour acquérir un indice d'aléa prédéfini, un indice de régularité et une valeur de proportion de données représentant un modèle d'utilisation de l'utilisateur ;

un module de calcul de données (703) configuré pour calculer d'une valeur de sortie d'habitude d'utilisateur représentant une habitude d'utilisation de l'utilisateur sur la base des groupes de données et de la valeur de proportion de données ;

un module de sortie d'instruction (704) configuré pour déterminer un jour d'attribut auquel appartient le jour actuel sur la base de la valeur de sortie d'habitude de l'utilisateur et d'un système de calendrier prédéfini, et sortir une instruction de commande correspondante sur la base de l'indice d'aléa, de l'indice de régularité et du résultat de détermination du jour d'attribut ;

un module de calcul de préchauffage (705) configuré pour détecter une température actuelle du climatiseur en temps réel, calculer un score de préchauffage du climatiseur sur la base de la température actuelle et acquérir un temps de préchauffage minimum du climatiseur en fonction du score de préchauffage ; et

un module d'exécution (706) configuré pour déterminer et exécuter l'activation et la désactivation de la fonction de préchauffage du climatiseur sur la base de l'instruction de commande, du temps de préchauffage minimum et d'un état de fonctionnement actuel du climatiseur.

9. Dispositif informatique (8) comprenant une mémoire (81) et un processeur (82), la mémoire contenant un programme informatique stocké dans celle-ci, le processeur (82), lors de l'exécution du programme informatique, mettant en œuvre les étapes du procédé de commande d'une fonction de préchauffage d'un climatiseur selon l'une quelconque des revendications 1 à 7.

10. Support de stockage lisible par ordinateur comprenant un programme informatique stocké dans celui-ci qui, lorsqu'il est exécuté par un processeur, met en œuvre les étapes du procédé de commande d'une fonction de préchauffage d'un climatiseur selon l'une quelconque des revendications 1 à 7.

Acquire air conditioner usage data of a user within a predetermined period, and divide the air conditioner usage data into different data groups on a weekly basis; — S10

Acquire a preset randomness index, regularity index and data proportion value representing a usage pattern of the user; — S20

Calculate a user habit output value representing a usage habit of the user based on the data groups and the data proportion value; — S30

Determine an attribute day to which the current day belongs based on the user habit output value and a preset calendar system, and output a corresponding control instruction based on the randomness index, the regularity index and the attribute day determination result; — S40

Determine a current temperature of the air conditioner in real time, calculate a preheating score of the air conditioner based on the current temperature, and acquire a minimum preheating time of the air conditioner based on the preheating score; — S50

Determine and execute enabling and disabling of the preheating function of the air conditioner based on the control instruction, the minimum preheating time and a current operating status of the air conditioner. — S60

**FIG. 1**

| Save air conditioner usage data of the user | — S104 |

↓

| Determine whether the air conditioner usage data of the predetermined period has been completely saved | — S105 |

| If not, use the initial randomness index, regularity index and data proportion value | — S201 |

| If so, calculate and update the randomness index, regularity index and data proportion value | — S202 |

**FIG. 2**

| Define a determination time zone, the determination time zone being every time period of an hour every day within a week; | — S101 |

↓

| Record and save the air conditioner usage data within the predetermined period, the air conditioner usage data including the enabling and disabling of the air conditioner in the determination time zone; | — S102 |

↓

| Divide the saved air conditioner usage data within the predetermined period into different data groups on a weekly basis. | — S103 |

**FIG. 3**

EP 4 438 965 B1

Acquire a user habit output value, and determine the attribute day to which the current day belongs based on the user habit output value and the preset calendar system; — S401

If the attribute day is a usage day, calculate the air conditioner usage data on that day based on the data groups and the data proportion value while pre-determining whether to enable the preheating function of the air conditioner in advance based on the randomness index, the regularity index and the air conditioner usage data calculation result, and output the pre-determination result as a control instruction; — S402

If the attribute day is an idle day and not a holiday, output a disabling control instruction; — S403

If the attribute day is an idle day and a holiday, acquire the pre-determination result of the last usage day closest to the current day and output it as a control instruction. — S404

## FIG. 4

## FIG. 5

24

Acquire a time period during which it is necessary to enable the preheating function of the air conditioner in advance and a minimum preheating time in the control instruction; — S501

In the time period during which it is necessary to enable the preheating function in advance, acquire a current operating status of the air conditioner; — S502

If the air conditioner has been turned on, disable the preheating function; — S503

If the air conditioner is in standby status, enable the preheating function based on the minimum preheating time. — S504

**FIG. 6**

Record actual usage data of the user and update the air conditioner usage data within the predetermined period with the actual usage data; — S601

Update the randomness index, regularity index and data proportion value using the updated air conditioner usage data. — S602

**FIG. 7**

Data grouping module — 701

Data acquisition module — 702

— 7

Data calculation module — 703

Instruction output module — 704

Preheating calculation module — 705

Execution module — 706

**FIG. 8**

8

Computer device

81

Memory

82

Processor

Network
interface

83

**FIG. 9**

**EP 4 438 965 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022068472 A